# EUROPEAN PATENT SPECIFICATION

(11) **EP 0 716 881 B1**
(45) Date of publication and mention of the grant of the patent: **03.06.1998**
(21) Application number: 95202241.6
(22) Date of filing: 18.08.1995
(51) Int. Cl.: B01J 8/04, C10G 49/00

(54) **Distributor device for multiple-bed downflow reactors**
Verteilervorrichtung für abwärtsfliessende mehrstufige Reaktoren
Dispositif de distribution pour réacteurs à plusieurs lits à courant descendant

(30) Priority: 23.08.1994 EP 94202412
(43) Date of publication of application: 19.06.1996
(73) Proprietor: SHELL INTERNATIONALE RESEARCH MAATSCHAPPIJ B.V., 2596 HR Den Haag (NL)
(72) Inventor: Den Hartog, Arie Pieter, NL-2596 HR The Hague (NL); van Vliet, Willem, NL-2596 HR The Hague (NL)

(56) References cited:
- EP-A- 0 207 673
- EP-A- 0 427 733
- FR-A- 1 486 678
- US-A- 3 787 189
- US-A- 3 855 068

## Description

The present invention relates to a distributor device for multiple-bed downflow reactors, a multiple-bed downflow reactor including the device and use of the multiple-bed downflow reactor in hydrocarbon processing.

Multiple-bed downflow reactors containing a number of superimposed reaction beds are used in the chemical and petroleum refining industries for effecting various processes such as catalytic dewaxing, hydrotreating and hydrocracking. In these processes a liquid phase is typically mixed with a gas phase and the fluids passed over a particulate catalyst maintained in the reaction beds. As the fluids pass concurrently through a reaction bed, the distribution of liquid and gas across the reaction bed will tend to become uneven with adverse consequences with regard to the extent of reaction and also temperature distribution. In order to achieve a uniform distribution of liquid and gas and of temperature in the fluids entering the next lower reaction bed, a fluid distributor device, of which there are many different types, is usually placed between the reaction beds.

Such a fluid distributor device is known from European Patent Specification No. 427 733. This document discloses a fluid distributor device for use between the reaction beds of a multiple-bed downflow reactor comprising
(i) a substantially horizontal collecting tray provided with gas passages in the form of chimneys extending through the tray and with a plurality of liquid passages;
(ii) a substantially horizontal distribution tray located below the collecting tray, which distribution tray is provided with a plurality of tubular downcomers for downward flow of liquid and gas;
(iii) a fluid deflector plate located above the centre of the collecting tray; and
(iv) a mixing chamber defined between the collecting tray and the distribution tray,
wherein the chimneys are arranged on a circle near the perimeter of the collecting tray and the liquid passages are located outside the area of the fluid deflector plate.

The known device furthermore comprises a mixing tray arranged above the collecting tray, which mixing tray is provided with two spillways for the passage of liquid and gas, which open below the mixing tray, and an annular receptacle for receiving liquid from the spillways, which receptacle has a central discharge opening.

During normal operation liquid and gas flow downwardly through the spillways and through the central discharge opening of the annular receptacle to the collecting tray. The flows are deflected radially outwards by the deflector plate, and liquid flows through the liquid passages of the collecting tray and is collected on the distribution tray whilst gas flows through the chimneys into the mixing chamber. Thereafter liquid and gas flow concurrently through the downcomers of the distribution tray.

Thus, in the known device, liquid and gas are brought into contact with one another in the mixing tray, then the fluids are passed separately to the distribution tray where they are again mixed. The known device provides opportunity for gas-gas, liquid-liquid and liquid-gas interactions to take place but the opportunity for liquid-liquid interactions and thus liquid equilibration is limited.

It is an object of the present invention to provide a fluid distributor device with means for effecting liquid equilibration.

In accordance with the present invention, there is therefore provided a distributor device for distributing liquid and gas in a multiple-bed downflow reactor which comprises
(i) a substantially horizontal collecting tray provided with a central gas passage surrounded by a weir and with liquid passages around the weir;
(ii) a substantially horizontal distribution tray located below the collecting tray, which distribution tray is provided with a plurality of tubular downcomers for downward flow of liquid and gas;
(iii) a fluid deflector plate located above the central gas passage of the collecting tray;
(iv) a mixing chamber defined between the collecting tray and the distribution tray; and
(v) open-ended guide conduits having first ends and second ends, wherein the first ends communicate with the liquid passages of the collecting tray and the second ends open into the mixing chamber, and wherein the second ends are so positioned that, during normal operation, liquid streams emerging from the second ends impinge.

Apart from being highly effective in distributing liquid and gas in a multiple-bed downflow reactor, the distributor device of the present invention has the further advantage of being relatively compact in form resulting in a significant reduction in the overall length of the reactor.

Also, if provided with means for distributing a quench fluid, the distributor device of the present invention can very effectively be used to achieve cooling of reactants/products between the reaction beds of a multiple-bed downflow reactor.

Accordingly, in one embodiment of the invention, the distributor device further comprises means for distributing a quench fluid, the means being located above the collecting tray.

Means for distributing a quench fluid are well known in the art and are described, for example, in European Patent Specification No. 427 733 referred to above (as an optional feature) and also United States Patent Specification Nos. 3 787 189 and 3 855 068.

United States Patent Specification No. 3 787 189 describes a fluid distributor device for use between the reaction beds of a multiple-bed downflow reactor comprising a quench gas distributor located above a series of three horizontal baffle plates (upper, intermediate and lower baffle plates). The intermediate baffle plate extends between the walls of the reactor and has a circular central opening. The upper and lower baffle plates are of smaller diameter and are positioned vertically above and below the circular central opening in the intermediate baffle plate.

During normal operation, fluid descending from an upper reaction bed is intimately mixed with quench gas by means of swirl vanes located between the baffle plates. The swirl vanes impart a swirling motion to the fluids which can only pass through the central opening of the intermediate baffle plate in a downward direction to a lower reaction bed.

In this device, there is mixing of the fluids descending from the upper reaction bed with the quench gas along the entire length of the flow path from the upper reaction bed to the lower reaction bed.

United States Patent No. 3 855 068 describes a fluid distributor device for use between the beds of a multiple-bed downflow reactor comprising quench gas means located above a downwardly sloping plate provided with an aperture. Secured to the underside of the plate below the aperture is a U-shaped pipe and downstream of the U-shaped pipe is a substantially horizontal collecting tray provided with gas passages in the form of upwardly extending chimneys and with a plurality of liquid passages.

During normal operation, liquid-gas streams pass through the U-shaped pipe and impinge on the underside of the plate where they are broken up into liquid and gas components. The liquid collects on the collecting tray and flows through the liquid passages and gas flows through the chimneys of the collecting tray onto a reaction bed below.

In common with the fluid distributor device of European Patent Specification No. 427 733, the fluid distributor devices of the above US patent specifications provide little or no opportunity for liquid to equilibrate.

In the operation of the above prior art devices incorporating quench fluid means, the heat exchange which occurs between the cold quench fluid and the hot fluids descending from an upper reaction bed is generally uneven so that the fluid mixture entering the lower reaction bed exhibits a highly variable temperature profile across the reactor.

By contrast, using the distributor device according to the present invention, gas-gas and liquid-liquid interactions are first effected separately to provide equilibrated gas and liquid phases which are individually of substantially uniform temperature (and composition). The temperature of the gas phase will usually be different to that of the liquid phase. The equilibrated gas and liquid phases are then brought together on the distribution tray and intimately mixed to promote gas-liquid interactions. In this way, a fluid mixture is produced which, on entering the lower reaction bed, shows a substantially uniform temperature (and composition) across the reactor.

The distributor device of the present invention may further comprise a substantially horizontal pre-distribution tray arranged between the open-ended guide conduits and the distribution tray, which pre-distribution tray is provided with an overflow weir at its perimeter and a plurality of openings near the perimeter. The advantages of having a pre-distribution tray are that it enables liquid to be spread more evenly over the distribution tray and it helps to promote liquid-liquid interactions and thus liquid equilibration.

The fluid deflector plate is conveniently supported above the central gas passage of the collecting tray by a support provided with apertures. The apertures may be provided with gas swirling means, e.g. in the form of swirl vanes, to promote gas-gas interactions and thus gas equilibration.

In order to promote liquid equilibration, the distributor device of the present invention will usually have at least four, preferably at least eight open-ended guide conduits and corresponding liquid passages to provide a large multiplicity of impinging liquid streams. Liquid equilibration is further promoted if the second ends of the guide conduits are arranged to lie within the same horizontal plane.

The invention will now be further described by way of example with reference to the accompanying drawings in which:
Figure 1 shows schematically a vertical cross-section of a portion of a multiple bed downflow reactor with a distributor device according to a first embodiment of the invention; and
Figure 2 shows schematically a vertical cross-section of a portion of a multiple bed downflow reactor with a distributor device according to a second embodiment of the invention which comprises means for distributing a quench fluid.

In the drawings like integers are denoted by like reference numerals.

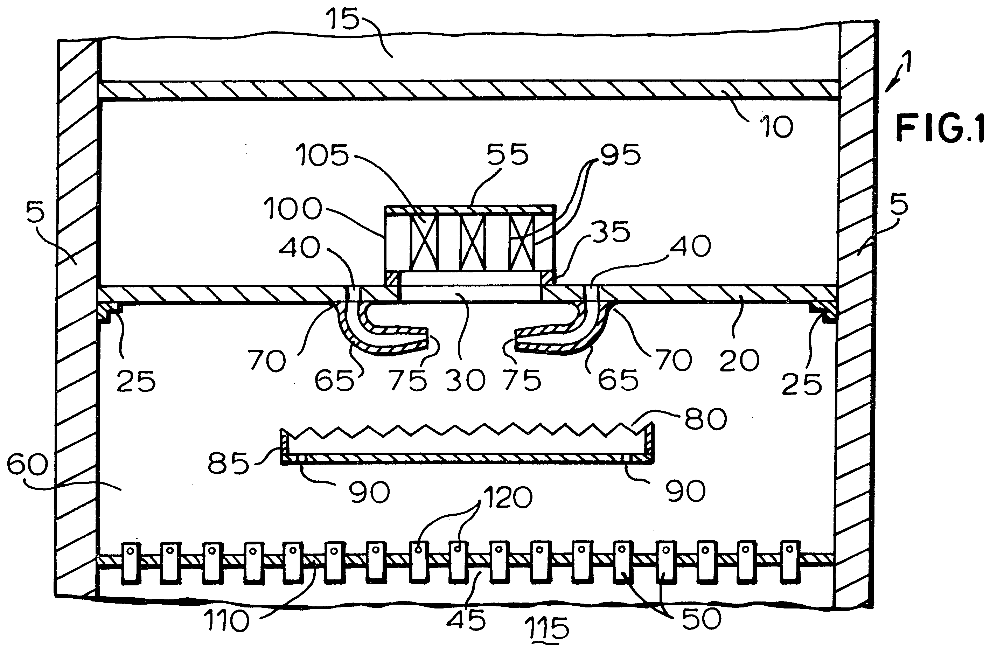

Figure 1 shows a cross-sectional view through the portion of a multiple bed downflow reactor in the region between the beds. The general configuration of the reactor will be conventional and details such as supports for the distribution tray are not shown for purposes of clarity.

In this embodiment, the walls 5 of the reactor 1 and the support grid 10 support an upper reaction bed 15 of solid contact material, e.g. catalyst, in particulate form, over which catalyst reactants flow and are at least partially converted into product. The support grid 10 is provided with passages (not shown) and may be of conventional type. Catalyst may be directly arranged on the support grid 10 or the catalyst may be arranged on a layer of support balls (not shown) which permit liquid and gas to flow downwardly out of the upper bed 15 and through the support grid 10, which support balls are arranged on the support grid 10.

The distributor device comprises a substantially horizontal collecting tray 20 supported on a ledge 25 which is provided with a central gas passage 30 surrounded by a weir 35 and with liquid passages 40 around the weir 35; a substantially horizontal distribution tray 45 located below the collecting tray 20, which distribution tray 45 is provided with a plurality of tubular downcomers 50 for downward flow of liquid and gas; a fluid deflector plate 55 located above the central gas passage 30 of the collecting tray 20; a mixing chamber 60 defined between the collecting tray 20 and the distribution tray 45; and open-ended guide conduits 65 having first ends 70 and second ends 75, wherein the first ends 70 communicate with the liquid passages 40 of the collecting tray 20 and the second ends 75 open into the mixing chamber 60, and wherein the second ends 75 are so positioned that, during normal operation, liquid streams emerging from the second ends 75 impinge.

The distributor device further comprises a substantially horizontal pre-distribution tray 80 arranged between the open-ended guide conduits 65 and the distribution tray 45, which pre-distribution tray 80 is provided with an overflow weir 85 at its perimeter and a plurality of openings 90 near the perimeter.

During normal operation, liquid descending from the upper reaction bed 15 collects on the collecting tray 20 where it accumulates to form a layer of liquid that covers the liquid passages 40 so that flow of gas through them is precluded. The flow of gas into a lower portion of the reactor 1 is provided by apertures 95 in side walls 100 supporting the fluid deflector plate 55. Gas descending from the upper reaction bed 15 is deflected off the fluid deflector plate 55 and flows first radially outwards and then radially inwards towards the apertures 95, the flow path taken being similar to that of a "U" turned on its side. On entering the apertures 95, gas swirling means 105 arranged in the apertures 95 impart a swirling motion to the gas which is only able to move downwardly through the central gas passage 30 into the mixing chamber 60 below. The swirling motion of the gas promotes gas-gas interactions and thus equilibration of the gas phase.

The liquid on the collecting tray 20 passes through the liquid passages 40 and into and through the guide conduits 65. For the purposes of clarity only two open-ended guide conduits 65 and corresponding liquid passages 40 are shown in Figure 1. The second ends 75 of the guide conduits 65 are so positioned that, during normal operation, liquid streams emerging from the second ends 75 impinge. In this way, liquid-liquid interactions are effected and liquid phase equilibration is facilitated.

Liquid from the guide conduits 65 accumulates on the pre-distribution tray 80 where it passes downwardly to the distribution tray 45 beneath through the openings 90 or, sometimes, by breaching the overflow weir 85. The vertical distance (A) between the collecting tray 20 and the pre-distribution tray 80, and the vertical distance (B) between the pre-distribution tray 80 and the distribution tray 45 are preferably related such that A/B is in the range from 1 to 3. Gas is deflected by the pre-distribution tray 80 and flows to the distribution tray 45.

The distribution tray 45 serves two purposes. Firstly, it evenly distributes liquid and gas before the fluids enter a lower reaction bed 115 and, secondly, it allows contact between liquid and gas to provide liquid-gas interaction.

The distribution tray 45 comprises a substantially horizontal plate 110 with a large number of tubular downcomers 50 to provide many points of distribution of liquid and gas over the lower reaction bed 115. Each downcomer 50 comprises an upstanding (substantially vertical), open-ended tube which extends through an opening (not shown) in the plate 110. Each tube has an aperture 120 (or apertures) in its side for entry of liquid into the tube which is positioned below the top of the pool of liquid which forms on plate 110 during normal operation. The total number and size of the apertures 120 will be selected according to the desired flow rate. Gas enters the top of the downcomer 50 and passes through it down to the lower reaction bed 115. It is in the downcomers 50 that intimate mixing between gas and liquid phases occurs.

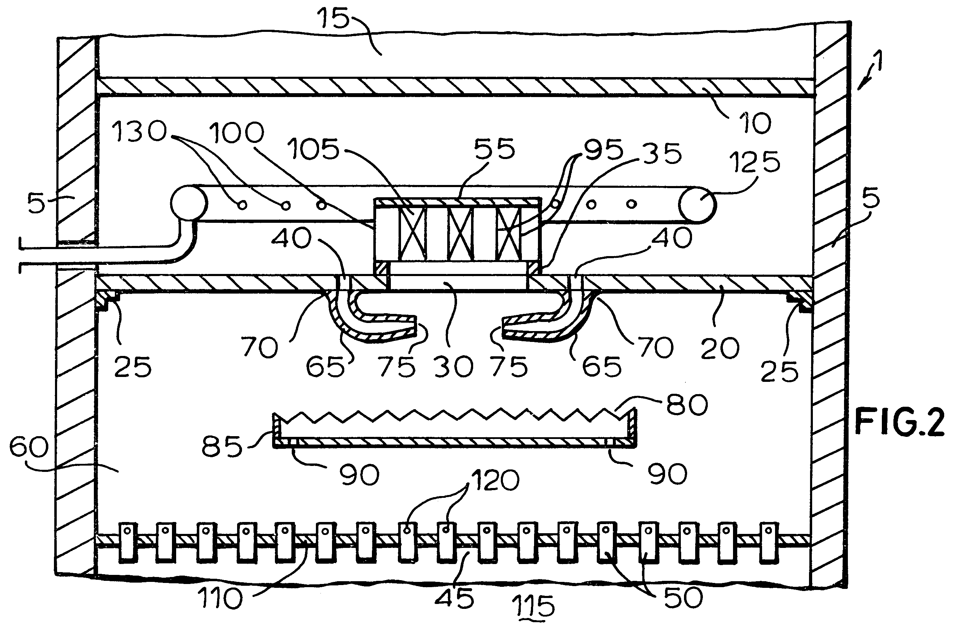

Figure 2 is similar to Figure 1 except that the distributor device further comprises means for distributing a quench fluid comprising a quench ring 125 provided with openings 130. The quench ring 125 is located between the support grid 10 and the collecting tray 20.

During normal operation, quench fluid is emitted into the reactor through openings 130 of the quench ring 125 where it comes into contact with liquid and gas descending from the upper reaction bed 15. The quench fluid may be a reactant (e.g. hydrogen gas in a hydrotreating or hydrocracking process), a product of the process or an inert material.

The present invention further provides a multiple-bed downflow reactor comprising vertically spaced beds of solid contact material, e.g. a catalyst, and a distributor device according to the invention positioned between adjacent beds.

The present invention still further provides the use of a multiple-bed downflow reactor as defined above in hydrocarbon processing, particularly in hydrotreating and hydrocracking processes.

A distributor device according to the present invention comprising means for distributing a quench fluid was installed and operated for a period of one year in a multiple-bed downflow reactor used in a catalytic hydrotreating process. At the end of this period, it was found that, compared to the operation of the same reactor with a conventional distributor device under similar conditions, significantly less catalyst deactivation had occurred, thereby making it possible for the reactor to continue in operation for a much longer period of time, with consequential efficiency and economic benefits. This finding clearly demonstrates the effectiveness of the distributor device of the present invention in controlling the formation of "hotspots" in the reactor (which are the result of an uneven temperature distribution across the reactor) that are a major cause of catalyst deactivation.

## Claims

1. A distributor device for distributing liquid and gas in a multiple-bed downflow reactor which comprises
(i) a substantially horizontal collecting tray provided with a central gas passage surrounded by a weir and with liquid passages around the weir;
(ii) a substantially horizontal distribution tray located below the collecting tray, which distribution tray is provided with a plurality of tubular downcomers for downward flow of liquid and gas;
(iii) a fluid deflector plate located above the central gas passage of the collecting tray;
(iv) a mixing chamber defined between the collecting tray and the distribution tray; and
(v) open-ended guide conduits having first ends and second ends, wherein the first ends communicate with the liquid passages of the collecting tray and the second ends open into the mixing chamber, and wherein the second ends are so positioned that, during normal operation, liquid streams emerging from the second ends impinge.

2. Distributor device according to claim 1, which further comprises means for distributing a quench fluid, the means being located above the collecting tray.

3. Distributor device according to claim 1 or claim 2, which further comprises a substantially horizontal pre-distribution tray arranged between the open-ended guide conduits and the distribution tray, which pre-distribution tray is provided with an overflow weir at its perimeter and a plurality of openings near the perimeter.

4. Distributor device according to any one of claims 1 to 3, wherein the fluid deflector plate is supported by a support provided with apertures.

5. Distributor device according to claim 4, wherein the apertures are provided with gas swirling means.

6. Distributor device according to any one of the preceding claims, comprising at least eight open-ended guide conduits and corresponding liquid passages.

7. Distributor device according to any one of the preceding claims, wherein the second ends of the open-ended guide conduits are arranged to lie within the same horizontal plane.

8. Distributor device according to any one of the preceding claims, wherein each downcomer comprises an upstanding, open-ended tube having an aperture in its side for entry of liquid into the tube.

9. A multiple-bed downflow reactor comprising vertically spaced beds of solid contact material and a distributor device positioned between adjacent beds, wherein the distributor device is as defined in any one of the preceding claims.

10. Use of a multiple-bed downflow reactor as defined in claim 9 in hydrocarbon processing.

## Patentansprüche

1. Verteilervorrichtung zum Verteilen von Flüssigkeit und Gas in einem Mehrbett-Abwärtsströmungsreaktor, welche aufweist:
(i) einen im wesentlichen horizontalen Auffangboden, der mit einem zentralen, von einem Überlaufwehr umgebenen Gasdurchlaß und mit Flüssigkeitsdurchlässen rund um das Überlaufwehr versehen ist;
(ii) einen im wesentlichen horizontalen Verteilerboden, der unterhalb des Auffangbodens liegt und mit mehreren rohrförmigen Abläufen zur Abwärtsströmung von Flüssigkeit und Gas versehen ist;
(iii) eine Fluidablenkplatte, die oberhalb des zentralen Gasdurchlasses des Auffangbodens liegt;
(iv) eine Mischkammer, die zwischen dem Auffangboden und dem Verteilerboden definiert ist; und
(iv) offene Führungsleitungen mit ersten Enden und zweiten Enden, wobei die ersten Enden mit den Flüssigkeitsdurchlässen des Auffangbodens in Verbindung stehen und die zweiten Enden in die Mischkammer münden, und wobei die Zweiten Enden so liegen, daß im normalen Betrieb die aus den zweiten Enden austretenden Flüssigkeitsströme aufeinanderprallen.

2. Verteilervorrichtung nach Anspruch 1, welche weiters Mittel zum Verteilen eines Abschreckfluides aufweist, wobei die Mittel oberhalb des Auffangbodens liegen.

3. Verteilervorrichtung nach Anspruch 1 oder 2, welche weiters einen im wesentlichen horizontalen Vor-Verteilerboden aufweist, der zwischen den offenen Führungsleitungen und dem Verteilerboden liegt, welcher Vor-Verteilerboden mit einem Überlaufwehr an seinem Umfang und mehreren Öffnungen nahe seinem Umfang versehen ist.

4. Verteilervorrichtung nach einem der Ansprüche 1 bis 3, bei welcher die Fluidablenkplatte von einem mit Öffnungen versehenen Träger abgestützt ist.

5. Verteilervorrichtung nach Anspruch 4, bei welcher die Öffnungen mit Gasverwirbelungsmitteln ausgestattet sind.

6. Verteilervorrichtung nach einem der vorhergehenden Ansprüche, mit zumindest acht offenen Führungsleitungen und korrespondierenden Flüssigkeitsdurchlässen.

7. Verteilervorrichtung nach einem der vorhergehenden Ansprüche, bei welcher die zweiten Enden der offenen Führungsleitungen so angeordnet sind, daß sie in derselben Horizontalebene liegen.

8. Verteilervorrichtung nach einem der vorhergehenden Ansprüche, bei welcher jeder Ablauf ein aufrechtstehendes, offenes Rohr mit einer Öffnung an seiner Seite für den Eintritt von Flüssigkeit in das Rohr aufweist.

9. Mehrbett-Abwärtsströmungsreaktor mit vertikal beabstandeten Betten aus festem Kontaktmaterial und einer zwischen benachbarten Betten angeordneten Verteilervorrichtung, bei welcher die Verteilervorrichtung so wie in einem der vorhergehenden Ansprüche definiert ist.

10. Verwendung eines Mehrbett-Anwärtsströmungsreaktors wie in Anspruch 9 definiert in der Kohlenwasserstoffverarbeitung.

## Revendications

1. Dispositif distributeur pour distribuer du liquide et du gaz dans un réacteur à flux descendant multilit, qui comprend :
(i) un plateau collecteur sensiblement horizontal, pourvu d'un passage à gaz central entouré d'un déversoir et avec des passages pour liquide autour du déversoir;
(ii) un plateau distributeur sensiblement horizontal logé en dessous du plateau collecteur, lequel plateau distributeur est pourvu d'une multiplicité de tubes descendants pour assurer l'écoulement descendant de liquide et de gaz;
(iii) un plateau déflecteur de fluide logé au-dessus du passage de gaz central du plateau collecteur;
(iv) une chambre de mélange délimitée entre le plateau collecteur et le plateau distributeur, et
(v) des conduites de guidage à extrémités ouvertes comportant des premières extrémités et des secondes extrémités, où les premières extrémités communiquent avec les passages à liquide du plateau collecteur et les secondes extrémités s'ouvrent dans la chambre de mélange et où les secondes extrémités sont positionnées en une manière telle que, au cours du fonctionnement normal, des courants de liquide qui émergent des secondes extrémités se heurtent.

2. Dispositif distributeur suivant la revendication 1, caractérisé en ce qu'il comprend, en outre, des moyens pour distribuer un fluide de refroidissement, les moyens en question étant situés au-dessus du plateau collecteur.

3. Dispositif distributeur suivant la revendication 1 ou la revendication 2, caractérisé en ce qu'il comprend, en outre, un plateau prédistributeur sensiblement horizontal disposé entre les conduites de guidage à extrémités ouvertes et le plateau distributeur, lequel plateau prédistributeur est pourvu d'un déversoir de trop-plein à son périmètre et d'un multiplicité d'ouvertures à proximité du périmètre.

4. Dispositif distributeur suivant l'une quelconque des revendications 1 à 3, caractérisé en ce que la plaque déflectrice de fluide est portée par un support pourvu d'orifices.

5. Dispositif distributeur suivant la revendication 4, caractérisé en ce que les orifices sont pourvus de moyens de tourbillonnement du gaz.

6. Dispositif distributeur suivant l'une quelconque des revendications précédentes, caractérisé en ce qu'il comprend au moins huit conduites de guidage à extrémités ouvertes et de passages à liquide correspondants.

7. Dispositif distributeur suivant l'une quelconque des revendications précédentes, caractérisé en ce que les secondes extrémités des conduites de guidage à extrémités ouvertes sont agencées de manière à se situer dans le même plan horizontal.

8. Dispositif distributeur suivant l'une quelconque des revendications précédentes, caractérisé en ce que chaque tube descendant comprend un tube dressé, à extrémité ouverte, possédant une ouverture dans son côté pour l'entrée de liquide dans le tube.

9. Réacteur à flux descendant multilit, qui comprend des lits verticalement espacés d'un matériau de contact solide et un dispositif distributeur mis en place entre des lits voisins, où le dispositif distributeur est tel que défini dans l'une quelconque des revendications précédentes.

10. Utilisation d'un réacteur à flux descendant multilit, tel que défini dans la revendication 9, pour le traitement d'hydrocarbures.
